# EUROPEAN PATENT APPLICATION

(11) **EP 4 246 140 A1**
(43) Date of publication of application: **20.09.2023**
(21) Application number: 23161392.8
(22) Date of filing: 13.03.2023
(51) Int. Cl.: G01N 29/04, G01N 29/44

(54) **SOFTWARE-BASED ASSISTANCE FOR NON-DESTRUCTIVE INSPECTION**

(30) Priority: 14.03.2022 US 202263319755 P
(71) Applicant: Baker Hughes Holdings LLC, Houston, TX 77073 (US)
(72) Inventor: WERNER, Daniel, Houston, TX 77073 (US); FRANZEN, Andreas, Houston, TX 77073 (US); KAHMANN, Frank, Houston, TX 77073 (US); HENRIX, Frank, Houston, TX 77073 (US)
(74) Representative: Illingworth-Law, William Illingworth

(57) **Abstract**

In an embodiment, an inspection assistance system is provided and includes a memory and a processor. The memory can be configured to maintain information regarding inspection data, target data, and knowledge base information. The inspection data can represent at least one measured feature of the target measured by a non-destructive testing device. The target data can include at least one of a target identifier and a target condition. The knowledge base information can correlate respective features of the target with a corresponding inspection evaluation recommendation. The processor can be in communication with the memory and it can be configured to receive the inspection data, the target data, and the knowledge base information from the memory. The processor can be further configured to identify, using at least a classifier and the inspection data, the at least one measured feature of the target. The processor can be additionally configured to determine, based at least upon the identified feature, the target data, and the knowledge base information, at least one inspection evaluation recommendation for the identified feature. The processor can be additionally configured to generate at least one graphical interface including the at least one determined inspection evaluation recommendation and at least one information selected from the knowledge base information, and a query prompting a user to make a selection from the at least one determined inspection evaluation recommendation. The processor can be additionally configured to output a report including the selected inspection evaluation recommendation.

## Description

### BACKGROUND

Non-destructive testing (NDT) is a class of analytical techniques that can be used to inspect a target, without causing damage, to ensure that the inspected target meets required specifications. For this reason, NDT has found wide acceptance in industries such as aerospace, power generation, oil and gas transport or refining, and transportation. NDT can be useful in industries that employ structures that are not easily removed from their surroundings (e.g., pipes or welds) or where failures would be catastrophic.

Ultrasonic testing is one type of NDT. Ultrasound is acoustic (sound) energy in the form of waves that have an intensity (strength) which varies in time at a frequency above the human hearing range. In ultrasonic testing, an ultrasonic probe can generate one or more ultrasonic waves and these waves can be directed towards a target in an initial pulse. As the ultrasonic waves contact and penetrate the target, they can reflect from features such as outer surfaces and interior defects (e.g., cracks, porosity, etc.) Measurements of reflected ultrasonic signals, also referred to as echoes (e.g., acoustic strength as a function of time), can be evaluated to make determinations, such as the location of features, the shape of features, and dimensions of features, amongst others.

### SUMMARY

Conventionally, NDT measurements are manually evaluated by a human inspector in order to make a variety of inspection evaluations. Such evaluations can include, but are not limited to, identification of one or more features, determinations as to whether a given feature is expected or unexpected, and whether or not the presence of a feature necessitates further inspection and/or maintenance, amongst others.

It can be appreciated, that inspectors can require extensive theoretical and in-field experience to make such inspection evaluations. However, training an inspector to a requisite level of expertise can be costly and time-consuming. Furthermore, even if NDT is performed using automated devices, the need to manually evaluate the test measurements can reduce the speed at which inspection is performed.

Embodiments of the present disclosure present systems and corresponding methods that provide software-based assistance for inspection. As discussed in detail below, an inspection assistance system can include a classifier configured to receive NDT testing measurements. The classifier can be trained using inspection instructions, training data, and the like. The inspection assistance system can be further configured to determine one or more inspection evaluation recommendations using a knowledge base that correlates respective features of a target with at least one corresponding inspection evaluation recommendations. The inspection assistance system can be further configured to present inspection evaluation recommendations to an inspector, along with other relevant information supporting the recommendation (e.g., information selected from the knowledge base). The inspection assistance system can also be configured to receive inspector input agreeing or disagreeing with the evaluation recommendation, as well as comments, and output a corresponding inspection report.

Embodiments of the inspection assistance system provide a variety of advantages. In one aspect, a certain degree of expertise previously required by an inspector can be supplemented by the inspection assistance system. Thus, the time and cost of inspector training can be reduced. Furthermore, in certain cases, inspection decisions can be made more quickly based on the evaluation recommendations and supporting information, as compared to solely relying upon an inspector's knowledge and experience.

Additionally, embodiments of the inspection assistance system can facilitate transfer of inspection knowledge. In one aspect, the classifier can be trained to identify specific features of a target. Training data can include, but is not limited to, historical inspection data acquired for comparable targets under a variety of service conditions. Such inspection data can be acquired by inspection devices comparable to those that will acquire testing data used by the inspection assistance system (e.g., ultrasonic testing data) and/or inspection data acquired by other inspection devices (e.g., optical devices, computed tomography devices), direct dimensional measurements, and the like.

In certain embodiments, this training can be performed by a manufacturer of the inspection assistance system (or an authorized third party) prior to delivery of the inspection assistance system to a customer for use by inspectors. In other embodiments, this training can be performed by the customer after receipt of the inspection assistance system from a manufacturer. In additional embodiments, this training can be updated by the manufacturer, customer, and/or a third party after an initial training. In this manner, can be employed in a variety of inspection systems, improving the accuracy of feature identification. In another aspect, the knowledge base can be updated over time with additional information, further improving the accuracy of inspection evaluation recommendations generated by the inspection assistance system.

In an embodiment, an inspection assistance system is provided and includes a memory and a processor. The memory can be configured to maintain information regarding inspection data, target data, and knowledge base information. The inspection data can represent at least one measured feature of the target measured by a non-destructive testing device. The target data can include a target identifier and a target condition. The knowledge base information can correlate respective features of the target with a corresponding inspection evaluation recommendation. The processor can be in communication with the memory and it can be configured to receive the inspection data, the target data, and the knowledge base information from the memory. The processor can be further configured to identify, using at least a classifier and the inspection data, the at least one measured feature of the target. The processor can be additionally configured to determine, based at least upon the identified feature, the target data, and the knowledge base information, at least one inspection evaluation recommendation for the identified feature. The processor can be additionally configured to generate at least one graphical interface including the at least one determined inspection evaluation recommendation and at least one information selected from the knowledge base information, and a query prompting a user to make a selection from the at least one determined inspection evaluation recommendation. The processor can be additionally configured to output a report including the selected inspection evaluation recommendation.

In another embodiment, the at least one measured feature can be a manufactured feature of the target or a defect of the target.

In another embodiment, the knowledge base information can include at least one manufactured feature of the target, inspection instructions, and prior inspection decisions regarding a measured feature.

In another embodiment, the target can be a train wheel.

In an embodiment, a plurality of inspection assistance systems are also provided. The plurality of inspection assistance systems can include a first inspection assistance system and a second inspection assistance system according to the inspection assistance system discussed above. The first inspection assistance system can include a first processor, a first knowledge base, and a first classifier, and the second inspection assistance system can include a second processor, a second knowledge base, and a second classifier. The first inspection assistance system can be configured to output at least one of the first knowledge base or the first classifier. The second inspection assistance system can be configured to receive at least one of the first knowledge base or the first classifier and replace at least one of the second knowledge base with the first knowledge base or the second classifier with the first classifier.

An example embodiment described within this disclosure is a method with the following features. Data representing a feature of a target measured by a non-destructive testing device and a correlation of respective features of the target with a corresponding inspection evaluation recommendation is received. The feature comprising a manufactured feature of the target or a defect of the target is identified using the received data representing the feature. At least one recommendation characterizing an inspection evaluation for the identified feature is determined based at least on the identified feature and the received data. The determination is performed using a classifier. The at least one determined inspection evaluation recommendation and a query prompting a user to make a selection of the determined at least one recommendation is displayed in a graphical user interface.

In some embodiments, the feature can include a manufactured feature of the target or a defect of the target.

In some embodiments, the data representing the target can include a target identifier and/or a target condition.

In some embodiments, determining the at least one recommendation can also be based on data representing a knowledge base. The data representing the knowledge base can be stored within a non-transitory memory of an inspection assistance system. The data representing the knowledge base can include manufactured features of the target, inspection instructions, prior inspection decisions regarding a measured feature, decisions made by prior inspectors, and/or supplementary information.

In some embodiments, at least part of the data representing the measured feature can include ultrasonic testing data received from a non-destructive testing device. The data can represent the measured feature is received by a user computing device.

In some embodiments, the target condition can include a date of a service of the target and/or a location of the service of the target.

In some embodiments, data representing the target can be received. The target can be a wheel. The data representing the target can include a class to which the wheel belongs, a manufacturer of the wheel, and/or a manufacturing batch number of the wheel.

In some embodiments, the classifier can include a machine learning algorithm. The classifier can be trained with historical inspection data acquired for comparable targets under a variety of service conditions.

In some embodiments, a user input selecting the determined at least one recommendation can be received. A report can be generated responsive to receiving the user input. The report can include the recommendation.

In some embodiments, a user input flagging the determined at least one recommendation can be received. The recommendation can be designated as a doubt-case to be evaluated later responsive to the user input.

### DESCRIPTION OF DRAWINGS

These and other features will be more readily understood from the following detailed description taken in conjunction with the accompanying drawings, in which:
FIG. 1 is a schematic diagram illustrating an operating environment including an inspection assistance system configured to generate inspection evaluation recommendations based upon non-destructive testing of a target;
FIG. 2 is a flow diagram illustrating one exemplary embodiment of a method for assisting inspection decision making;
FIG. 3 is an image illustrating a train and a train wheel;

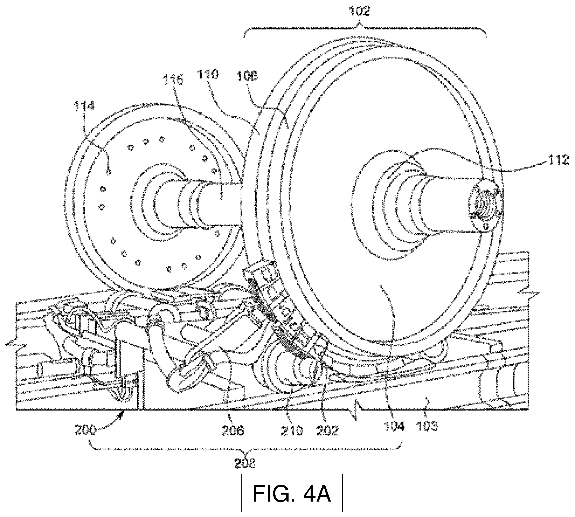

FIG. 4A is an image illustrating one exemplary embodiment of an operating environment including a ultrasonic testing system having a ultrasonic probe for inspection of train wheels;

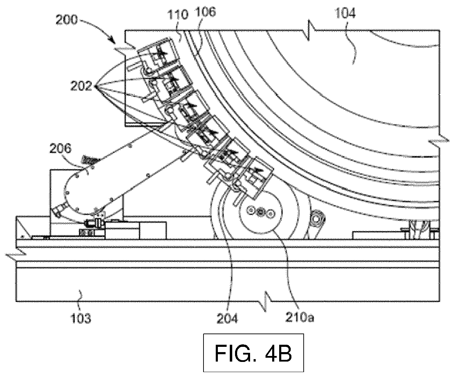

FIG. 4B is a schematic diagram illustrating a zoomed-in view of the ultrasonic testing system of FIG. 4A; and
FIG. 5A-5C are schematic diagrams illustrating graphical user interfaces displaying inspection test data.

It is noted that the drawings are not necessarily to scale. The drawings are intended to depict only typical aspects of the subject matter disclosed herein, and therefore should not be considered as limiting the scope of the disclosure.

### DETAILED DESCRIPTION

It can be common to inspect industrial equipment by non-destructive testing, such as ultrasonic testing, to ensure that features of the equipment meet required specifications (e.g., dimensions, shape, size, absence of defects, etc.) However, it can require a highly trained inspector to identify features from measured inspection data and make inspection decisions regarding the identified features. An inspection assistance system is provided can identify features of a target from the inspection data using a trained computer algorithm (e.g., a classifier). The classifier can be trained using inspection instructions, training data, and the like, and configured to determine one or more inspection evaluation recommendations. The inspection assistance system can be further configured to determine one or more inspection evaluation recommendations using a knowledge base that correlates respective features of a target with at least one corresponding inspection evaluation recommendations. The inspection assistance system can be further configured to present inspection evaluation recommendations to an inspector, along with other relevant information supporting the recommendation (e.g., information selected from the knowledge base). The inspection assistance system can also be configured to receive inspector input agreeing or disagreeing with the evaluation recommendation, as well as comments, and output a corresponding inspection report. In this manner, the inspection assistance system can allow inspectors having less training and/or experience to make inspection decisions with accuracy and/or speed comparable to inspectors having more training.

Embodiments of the present disclosure discussed herein provide an inspection assistance system and corresponding methods configured to generate inspection evaluation recommendations. To facilitate ease of understanding, certain embodiments are discussed in the context of non-destructive testing (NDT), such as ultrasonic testing, and target objects such as train wheels. However, embodiments of the disclosure can be employed to in combination with any type of testing and target object without limit.

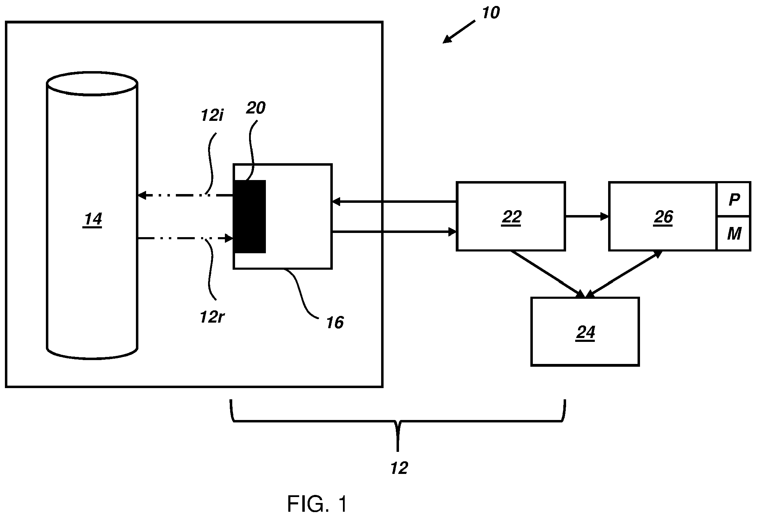

FIG. 1 illustrates one exemplary embodiment of an operating environment 10 containing a non-destructive testing (NDT) system 12 configured to perform non-destructive testing of a target 14. The NDT system 12 can include a probe 16 having one or more transducers 20 and an analyzer 22. As discussed in detail below, in certain embodiments, the NDT system 102 can be an ultrasonic testing system and the one or more transducers 112 can be ultrasonic transducers.

In use, the probe 16 can be positioned proximate to the target 14 (e.g., in contact with or near the target 14) for directing incident signals 12i towards the target 14 and measuring return signals 12r. The analyzer 22 can be configured to receive the measured return signals 12r from the probe 16 and it can output the measured return signals 12r, before or after further processing, for display to a user (e.g., via a user computing device 24). As discussed herein the measured return signals, whether in a raw, unprocessed form, or after processing, can be referred to as inspection data. Accordingly, the inspection data can include data representing one or more features of the target 14 measured by the NDT device 12, such as external surfaces (e.g., dimensions) and internal surface (e.g., size, orientation, and/or position of any of cracks, boundaries between different materials, external surfaces, etc.) can be determined from the measurements.

The NDT system 12 can further be in communication with an inspection assistance system 26. The inspection assistance system 26 can include one or more processors P and one or more memory M. As discussed in greater detail below, the inspection assistance system 26 can be configured to identify one or more target features and one or more inspection evaluation recommendations based upon the inspection data and a plurality of other supplemental data. The supplemental data may be known information regarding the target, potential target features, historical testing data, training materials, and the like. The inspection assistance system 26 can be further configured to generate a graphical user for display of the at least one inspection evaluation and the corresponding supplemental data to the inspector. In this manner, the inspection assistance system 26 can not only help an inspector to identify target features but further provides appropriate information allowing an inspector to quickly determine whether one or more of inspection evaluation recommendations is correct.

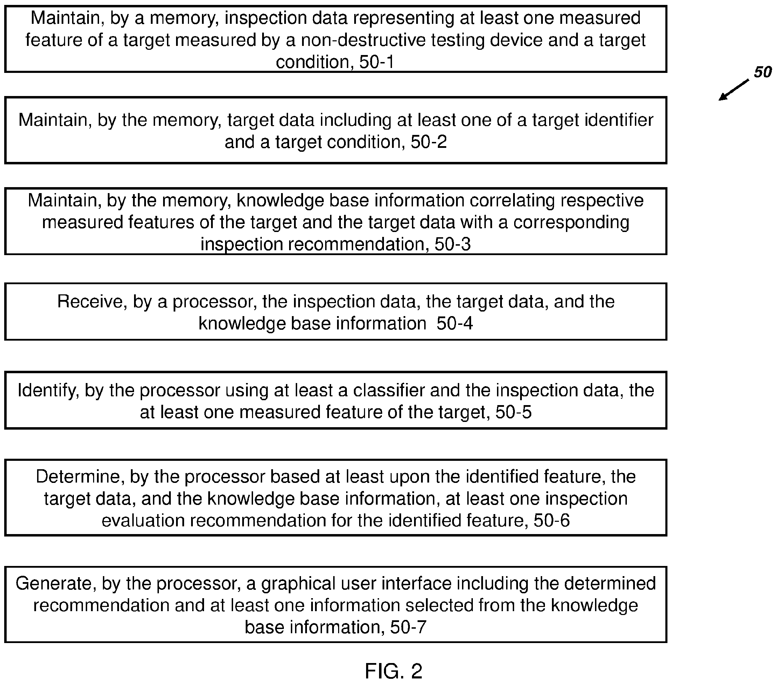

FIG. 2 illustrates one exemplary embodiment of a method 50 for assisting an inspection performed by the inspection assistance system 26. As shown, the method 50 can include operations 50-1 to 50-6. However, alternative embodiments of the method can include greater or fewer operations and the operations can be performed in a different order than shown.

In operation 50-1, the inspection assistance system 26 can be configured to receive inspection data and store the inspection data in the memory M. The inspection data can be acquired by the NDT system 12 and it can include data representing at least one measured feature of the target 14. The measured features of the target can be any features that the NDT system 12 is capable of detecting and/or is configured by an inspector to detect. Examples of such features can be manufactured features of the target 14 or defects that are generated during use of the target. In certain embodiments, the inspection assistance system 26 may receive the inspection data directly from the NDT system 12. In other embodiments, the inspection data may be received by the inspection assistance system indirectly from the NDT system, such as from another data storage device.

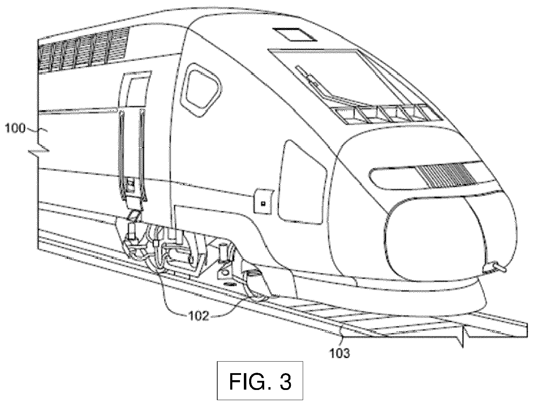

To facilitate understanding, embodiments of the disclosure are further discussed below in with the target 14 in the form of a train wheel and the NDT system 12 in the form of an ultrasonic testing system. FIG. 3 illustrates an embodiment of a train 100 including train wheels 102 positioned on rails 103, and FIGS. 3A-3B illustrate one exemplary embodiment of the non-destructive testing system 12 in the form of an ultrasonic testing system 200 for inspection of the train wheel 102. As shown, the train wheel 102 can include a wheel disk 104, a running tread 106, and a wheel flange 110. The wheel disk 104 can form a center of the train wheel 102 and the running tread 106 can form a circumferential outer surface of the train wheel 102. The wheel flange 110 can be formed on one side of the train wheel 102 (e.g., an interior side) and extend radially outward from the running tread 106.

The wheel disk 104 can include one or more holes therethrough. As shown, a primary hole 112 can be positioned at about a center of the wheel disk 104 and be configured for receipt of an axle 115 therethrough. One or more secondary holes 114 can be formed radially outward from the primary hole 112 and configured for coupling other components to the train wheel 102, such as brake disks (not shown). Any of 103-114 can be considered manufactured features of the train wheel 102.

The ultrasonic testing system 200 can include one or more ultrasonic probes 202 and a probe positioning assembly 208 including a probe holder 204, a probe holder mount 206, and a lift and rotation unit 210. As shown, a predetermined number of ultrasonic probes 202 can be mechanically coupled to the probe holder 204 and oriented with respect to one another by the probe holder 204 (e.g., in an arcuate configuration mimicking a curvature of the running tread 106). Each probe holder 204 in turn can be coupled to the probe holder mount 206. When using the ultrasonic testing system 200 for inspection of train wheel 102, the lift and rotation unit 210 can be configured to lift the train wheel 102 above the underlying rail 103 and rotate the train wheel 102 about an axis extending through the primary hole 112 (e.g., via one or more rotation wheels 210a). The probe holder mount 206 can be coupled to the probe holder 204 and it can be configured to position the ultrasonic probes 202 adjacent to or in contact with the running tread 106 for ultrasonic communication with the train wheel 102 while lifted. While not shown, an ultrasonic couplant fluid can be provided between the ultrasonic probes 202 and the train wheel 102 to facilitate ultrasonic communication.

In general, when ultrasonic beams pass through a material, they can reflect from surfaces of the material, such as interior defects (e.g., cracks, pores, etc.) and outer surfaces. Material features, such as geometric boundaries and defects, can reflect ultrasonic beams in different ways. Some material features can reflect ultrasonic beams better than others, and the strength of the reflected ultrasonic beams can vary. Material features can also be at different distances from the ultrasonic probes and the time at which reflected ultrasonic beams reach the ultrasonic probes can vary. Measurements of the strength and time behavior of ultrasonic beams reflected from the train wheel 102 can be analyzed to provide the inspection data representing the features of the train wheel. Thus, the inspection data can provide information regarding relative position, shape, and dimensions of features (e.g., manufactured features and/or defects) of the train wheel 102.

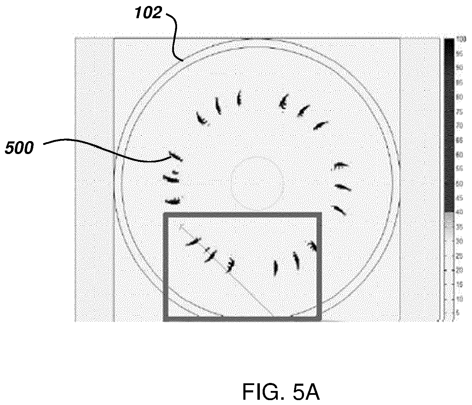

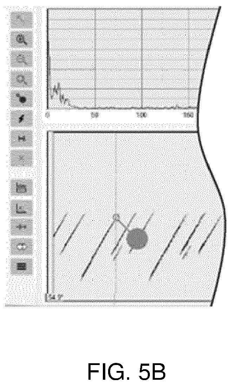

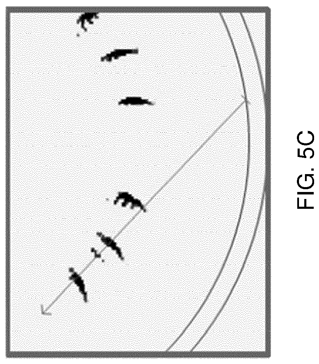

FIG. 5A-C illustrates an embodiment of a graphical user interface displaying inspection data. FIG. 5A illustrates a 2D projection of features 500 overlaid on a train wheel 102. FIG. 5B illustrates raw data (e.g., ultrasonic A-scan) corresponding to a selected feature within the projection of FIG. 5A. FIG. 5C illustrates a zoomed-in view of a selected portion of FIG. 5A.

In operation 50-2, the inspection assistance system 26 (e.g.., the memory M) can receive and maintain target data regarding the target 14. In one aspect, the target data can include an identifier of the target 14. The target identifier can include information such as, a class to which the target 14 belongs, information identifying the manufacture of the target (e.g., a manufacturer of the target, a manufacturing batch number etc.) In another aspect, the target data can include a condition of the target 14. In an example, target condition can include service history, such as time in service, location of service, etc.

In operation 50-3, the inspection assistance system 26 (e.g., the memory M) can receive and maintain knowledge base information. The knowledge base information can correlates features of the target 14 (e.g., identified features of the target 14) and target data with a corresponding inspection evaluation recommendation.

In operation 50-4, the processor P of the inspection assistance system 26 can receive the inspection data, target data, and the knowledge base information from the memory M.

In operation 50-5, the inspection assistance system 26 (e.g., the processor P) can identify features of the target 14. As an example, the processor P of the inspection assistance system 26 can be configured to execute one or more machine learning algorithms that are trained to classify features present within a target 14 based upon the inspection data in order to identify the features. Examples of classifiers can include, but are not limited to, table classifiers, vector classifiers, neural networks, C5.0-based classifiers, etc. As discussed above, the identified feature can be any manufactured or defect feature of the target 14.

Once target features have been identified, in operation 50-6, the inspection assistance system 26 (e.g., the processor P) can determine an inspection evaluation recommendation based at least upon the identified feature, target data, and the knowledge base information. As an example, the knowledge base information can include one or more of manufactured features of the target, inspection instructions, and prior inspection decisions regarding a measured feature (inspection history). In certain embodiments, the target data may be included within the knowledge base information or be independent of the knowledge base data.

As an example, in the context of manufactured features, the inspection assistance system 26 can compare the identified feature to one or more manufactured features of the target. For example, the comparison can be performed to determine whether one or more characteristics of the identified feature (e.g., position, shape, dimensions, etc.) are within a predetermined tolerance. The predetermined tolerance can be established by the manufacturer, inspection instructions, or by another authority (e.g., a regulatory agency). If so, the identified feature can be considered to pass inspection, while if not, the identified feature can be considered to not pass inspection.

Inspection instructions and/or inspection history can serve as the source of an inspection evaluation recommendation. That is, inspection instructions may set a bright line rule setting a predetermined tolerance and/or the appropriate action when the target feature passes or does not pass inspection. Alternatively or additionally, the inspection evaluation recommendation may be determined based upon prior inspections of an identical or similar feature or target.

In operation 50-7, the inspection assistance system 26 can generate a graphical user interface (GLTI) for display to the inspector (e.g., via the user computing device 24. The GUI can include the at least one determined inspection evaluation recommendation and at least one information selected from the knowledge base information. The knowledge information can be, in one aspect, one or more links to additional information (e.g., decisions made by prior inspectors, articles/supplementary information to consult, etc.)

In one aspect, this GLTI benefits the inspector by helping them to focus on specific recommendations out of many possible recommendations. In another aspect, this GLTI benefits the inspector by providing the knowledge base information upon which the recommendation is based. The inspector can therefore quickly evaluate the accuracy of the recommendation, without the need for extensive research, consultation with colleagues, or other information gathering.

In further embodiments, the GUI can be configured to facilitate generation of inspection reports. As an example, the GLTI can include a query prompting the inspector to make a selection from the at least one determined inspection evaluation recommendation. The inspection assistance system 26 can further generate a report including the selected recommendation. In further embodiments, the report can also include at least a portion of the inspection data.

In additional embodiments, the inspection assistance system 26 can be configured to update the GUI displaying the inspection data (e.g., FIGS 5A-5C) to mask selected inspection data and corresponding features. In this manner, the inspector can focus on the selected inspection data and corresponding features without the distraction of other data, facilitating the inspector's decision making process.

In further embodiments, the inspector may disagree with, or may be uncertain regarding, an inspection evaluation recommendation. Accordingly, the GUI may further allow the inspector to flag or otherwise designate these doubt-cases for separate evaluation. The separate evaluation can be performed by the same inspector at a later date, by a different inspector, another inspection assistance system, or any combination thereof.

A doubt-case may be designated for later review by the same inspector under circumstances where the inspector believes they can arrive at the correct inspection decision but requires additional time, information, and/or consultation with other inspectors.

A doubt-case may be designated by a first inspector for later review by a second inspector under circumstances where the first inspector believes they will not be able to arrive at the correct inspection decision even with additional time, information, and/or consultation with other inspectors.

A doubt-case may be designated for later review by a second inspection assistance system under circumstances where the second inspection assistance system has a different classifier and/or knowledge base as compared to the first inspection assistance system. For example, the second inspection assistance system may have a classifier and/or knowledge base that is more specific to the identified feature, as compared to the first inspection assistance system. Thus, one or more of the inspection evaluation recommendations provided by the second inspection assistance can be different from those provided by the first inspection assistance system and/or can be considered to have greater credibility than those provided by the first inspection assistance system.

In further embodiments, a plurality of inspection assistance systems can be employed. It can be appreciated that the knowledge base and machine learning used by one inspection assistance system can also be used by another inspection assistance system. For example, the plurality of inspection assistance systems can include a first inspection assistance system and a second inspection assistance system according to the inspection assistance system discussed above. The first inspection assistance system can include a first processor, a first knowledge base, and a first classifier, and the second inspection assistance system can include a second processor, a second knowledge base, and a second classifier. The first and second classifier and the first and the first and second knowledge base can be different. For example, the first classifier can be considered to be fully trained, or to possess a most current degree of training, while the second classifier can be less trained as compared to the first classifier. Similarly, the first knowledge base can be considered more comprehensive or more current than the second knowledge base.

The first inspection assistance system can be configured to output at least one of the first knowledge base or the first classifier. The second inspection assistance system can be configured to receive at least one of the first knowledge base or the first classifier and replace at least one of the second knowledge base with the first knowledge base or the second classifier with the first classifier. In this manner, use of the first classifier and/or first knowledge base by the second inspection assistance system, as compared to the second classifier and/or second knowledge base, can allow the second inspection assistance system to be prepared for use more quickly. That is, training of the second classifier and/or building of the second knowledge base can be skipped.

Exemplary technical effects of the methods, systems, and devices described herein include, by way of non-limiting example, providing software-based assistance to an inspector in the form of feature identification and inspection evaluation recommendations for use in making inspection decisions. This guiding/mentoring can facilitate the accuracy and speed of inspection decisions. Accordingly, software assistance can reduce the amount of training required for inspectors.

Certain exemplary embodiments have been described to provide an overall understanding of the principles of the structure, function, manufacture, and use of the systems, devices, and methods disclosed herein. One or more examples of these embodiments have been illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon.

The subject matter described herein can be implemented in analog electronic circuitry, digital electronic circuitry, and/or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software *per se*). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

One skilled in the art will appreciate further features and advantages of the invention based on the above-described embodiments. Accordingly, the present application is not to be limited by what has been particularly shown and described, except as indicated by the appended claims. All publications and references cited herein are expressly incorporated by reference in their entirety.

## Claims

1. An inspection assistance system, comprising:
a memory configured to maintain information regarding:
inspection data representing at least one measured feature of a target measured by a non-destructive testing device;
target data including at least one of a target identifier and a target condition;
knowledge base information correlating respective features of the target and the target data with a corresponding inspection evaluation recommendation; and
a processor in communication with the memory and configured to:
receive the inspection data, the target data, and the knowledge base information from the memory;
identify, using at least a classifier and the inspection data, the at least one measured feature of the target based upon the inspection data;
determine, based at least upon the identified feature, the target data, and the knowledge base information, at least one inspection evaluation recommendation for the identified feature;
generate at least one graphical user interface including:
the at least one determined inspection evaluation recommendation and at least one information selected from the knowledge base information; and
a query prompting a user to make a selection from the at least one determined inspection evaluation recommendation; and
output a report including the selected inspection evaluation recommendation.

2. The system of claim 1, wherein the at least one measured feature is a manufactured feature of the target or a defect of the target.

3. The system of claim 1, wherein the knowledge base information comprises at least one manufactured feature of the target, inspection instructions, and prior inspection decisions regarding a measured feature.

4. The system of claim 1, wherein the target is a train wheel.

5. A plurality of inspection assistance systems comprising:
a first inspection assistance system according to claim 1, including a first processor and a first knowledge base, and a first classifier; and
a second inspection assistance system according to claim 1, including a second processor, a second knowledge base and a second classifier;
wherein the first inspection assistance system is configured to output at least one of the first knowledge base or the first classifier; and
wherein the second inspection assistance system is configured to receive at least one of the first knowledge base or the first classifier, and replace at least one of the second knowledge base with the first knowledge base or the second classifier with the first classifier.

6. A method comprising:
receiving data representing a feature of a target measured by a non-destructive testing device and a correlation of respective features of the target with a corresponding inspection evaluation recommendation;
identifying, using the received data representing the feature, the feature comprising a manufactured feature of the target or a defect of the target;
determining, based at least on the identified feature and the received data, at least one recommendation characterizing an inspection evaluation for the identified feature, the determining performed using a classifier; and
displaying, in a graphical user interface, the at least one determined inspection evaluation recommendation and a query prompting a user to make a selection of the determined at least one recommendation.

7. The method of claim 6, wherein the feature comprises:
a manufactured feature of the target; or
a defect of the target.

8. The method of claim 6, wherein the data representing the target comprises:
a target identifier; and
a target condition.

9. The method of claim 6, wherein determining the at least one recommendation is also based on data representing a knowledge base, wherein the data representing the knowledge base is stored within a non-transitory memory of an inspection assistance system, wherein the data representing the knowledge base comprises:
manufactured features of the target;
inspection instructions;
prior inspection decisions regarding a measured feature;
decisions made by prior inspectors; or
supplementary information.

10. The method of claim 6, wherein at least part of the data representing the measured feature comprises ultrasonic testing data received from a non-destructive testing device, wherein the data representing the measured feature is received by a user computing device.

11. The method of claim 6, wherein the target condition comprises:
a date of a service of the target; or
a location of the service of the target.

12. The method of claim 6, further comprising receiving data representing the target, wherein target is a wheel, wherein the data representing the target comprises:
a class to which the wheel belongs;
a manufacturer of the wheel; or
a manufacturing batch number of the wheel.

13. The method of claim 6, wherein the classifier comprises a machine learning algorithm, the method further comprising:
training the classifier with historical inspection data acquired for comparable targets under a variety of service conditions.

14. The method of claim 6, further comprising:
receiving a user input selecting the determined at least one recommendation; and
generating a report responsive to receiving the user input, the report including the recommendation.

15. The method of claim 6, further comprising:
receiving a user input flagging the determined at least one recommendation; and
designating the recommendation as a doubt-case to be evaluated later responsive to the user input.
